# FASCICULE DE BREVET EUROPEEN

(11) **EP 1 134 150 B1**
(45) Date de publication et mention de la délivrance du brevet: **11.02.2004**
(21) Numéro de dépôt: 01400655.5
(22) Date de dépôt: 13.03.2001
(51) Int. Cl.: B62D 33/08, B60J 7/16

(54) **Véhicule à carrosserie modulaire**
Kraftfahrzeug mit modularem Aufbau
Vehicle with modular body

(30) Priorité: 13.03.2000 FR 0003191
(43) Date de publication de la demande: 19.09.2001
(73) Titulaire: S.A. Libner, 79400 Saint-Maixent l'Ecole (FR)
(72) Inventeur: Libner, Hervé, 97400 Saint Maixent L'Ecole (FR)
(74) Mandataire: Laget, Jean-Loup

(56) Documents cités:
- EP-A- 0 881 112

## Description

La présente invention concerne un véhicule à carrosserie modulaire comportant un dispositif de portes articulées télescopiques selon le préambule de la revendication 1. Un tel véhicule est connu du document EP-A- 0 881 112.

Il est connu de prévoir des véhicules munis d'un toit pouvant être surélevé de manière à faciliter l'accès à l'intérieur dudit véhicule ou à augmenter le volume dudit espace.

Ces véhicules, lorsqu'ils sont munis de portes arrières articulées, doivent donc présenter des portes modulaires.

Un problème apparaît dans la mesure où il convient de réaliser une articulation efficace de ces portes tant en position simple qu'en position surélevée dans la mesure où les portes sont équipées de tôles qui se surélèvent en même temps que l'ensemble de la carrosserie.

Afin de pallier cet inconvénient, la présente invention a pour but de proposer un véhicule pourvu d'une carrosserie modulaire qui permet la surélévation du toit et présentant en particulier des portes articulées aussi bien en position normale qu'en position surélevée.

A cet effet l'invention a pour objet un véhicule à carrosserie modulaire dont la carrosserie se transforme entre une position normale et une position dans laquelle le toit est surélevé, ladite carrosserie étant pourvue sur sa face arrière de portes constituées de profilés et articulées sur les faces latérales de ladite carrosserie, chaque articulation étant pivotante autour d'au moins un axe de pivotement porté par une face latérale, caractérisé en ce que chaque porte comporte un profilé modulaire et, en position normale de la carrosserie, deux articulations sont disposées en contact l'une au-dessus de l'autre et, en position dans laquelle le toit est surélevé, les deux articulations sont écartées l'une de l'autre, le profilé modulaire de la porte étant solidaire de l'articulation entraînée en écartement de l'autre.

Ainsi de manière avantageuse, quelle que soit la position de la carrosserie, les portes sont toujours parfaitement articulées sur les faces latérales.

Selon une variante de réalisation, ledit axe de pivotement porté par des platines solidaires d'une face latérale est un axe télescopique.

Selon une autre variante de réalisation, ledit axe de pivotement est constitué d'au moins deux bouts d'axe alignés, chacun coopérant avec l'une des articulations en contact l'une avec l'autre en position normale et étant écartables l'un de l'autre lors de l'entraînement de la carrosserie en surélévation

De préférence, chaque extrémité d'une face latérale de la carrosserie est pourvue d'un poteau sur lequel sont montées les articulations des portes, en particulier l'axe de pivotement solidaire de la carrosserie, ce poteau renfermant également les moyens d'entraînement en surélévation de la carrosserie.

Selon une forme de réalisation, l'articulation peut être constituée d'une plaque formant bielle montée pivotante à la fois autour du premier axe de pivotement porté par une platine solidaire de la caisse du véhicule et d'un second axe de pivotement porté par une platine solidaire de la porte. Les deux axes selon l'invention peuvent être télescopiques ou constitués respectivement de deux bouts d'axes.

On décrira maintenant plus en détail un exemple de réalisation de l'invention en référence au dessin annexé dans lequel :
la figure 1 représente une vue une vue en élévation frontale d'une face arrière de véhicule selon l'invention en position normale de la carrosserie ;
la figure 2 représente une vue en élévation latérale d'un poteau de face latérale du véhicule selon la figure 1 ;
la figure 3 représente une vue selon la figure 1 en position de surélévation de la carrosserie ; et
la figure 4 représente une vue selon la figure 2 en position de surélévation de la carrosserie.

La face arrière de la carrosserie du véhicule selon l'invention comporte deux portes 1 constituées de profilés et articulées sur les faces latérales et, plus précisément, sur deux poteaux 2 disposés à l'extrémité desdites faces latérales.

Chaque porte 1 est articulée sur lesdits poteaux 2 à l'aide d'au moins une articulation 3 montée pivotante autour d'un axe de pivotement x porté par le poteau 2.

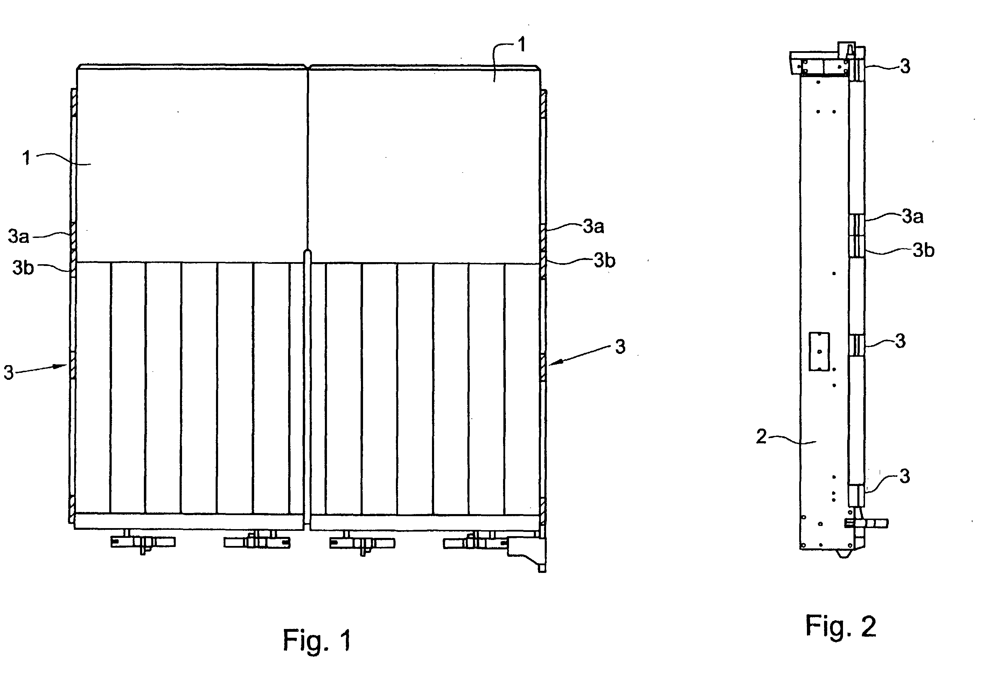

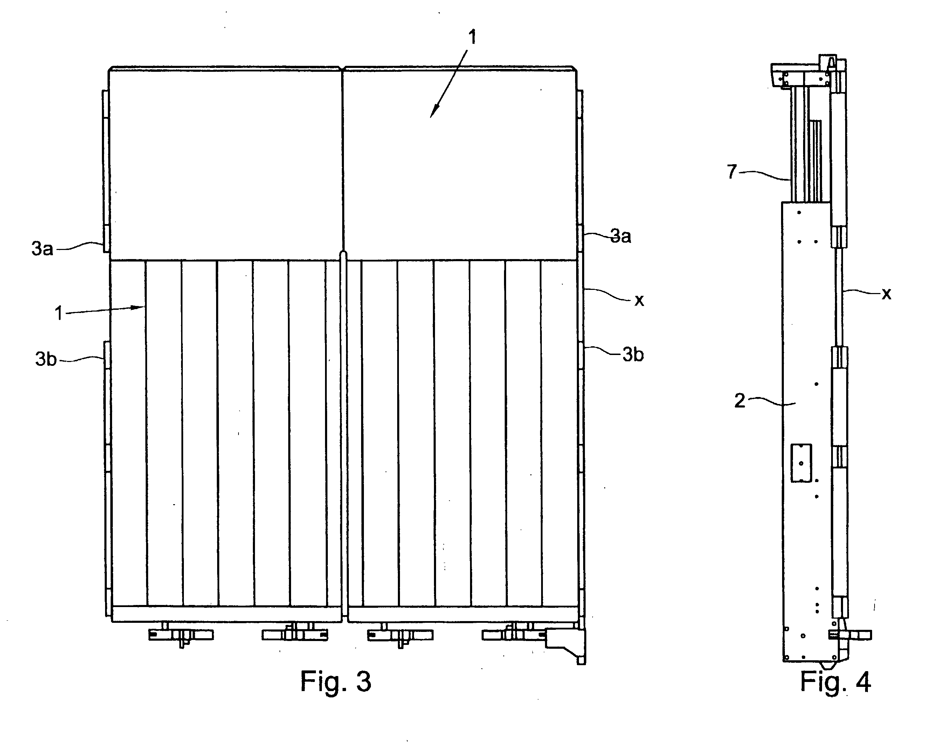

Le poteau 2 renferme également des montants télescopiques 7 entraînables entre la position normale de la carrosserie (figures 1, 2) et la position surélevée de ladite carrosserie (figures 3, 4).

La porte 1 comporte en outre un profilé modulaire, de préférence un profilé télescopique caché dans le profilé inférieur en position normale et qui se déploie lors du passage vers la position surélevée de la carrosserie.

En position normale de la carrosserie, deux articulations 3a et 3b sont en contact l'une au dessus de l'autre, une articulation 3a étant reliée au profilé de la porte 1 entraînable lors du passage vers la position surélevée et qui porte le profilé télescopique tandis que l'autre articulation 3b est solidaire du profilé restant immobile.

Lors de l'entraînement de la structure vers la position surélevée, l'axe de pivotement x qui est télescopique se déploie.

Comme cela est visible sur la partie de gauche de la figure 1 et de la figure 3, l'axe de pivotement x est constitué de deux bouts d'axes l'un coopérant avec l'articulation 3a et l'autre avec l'articulation 3b de telle sorte qu'ils sont écartables l'un de l'autre lors de l'entraînement vers la position surélevée.

On peut également avoir une combinaison de l'une ou de l'autre des formes d'axes de pivotement.

## Revendications

1. Véhicule à carrosserie modulaire dont la carrosserie se transforme entre une position normale et une position dans laquelle le toit est surélevé, ladite carrosserie étant pourvue sur sa face arrière de portes (1) constituées de profilés et articulées sur les faces latérales de ladite carrosserie, chaque articulation (3, 3a, 3b) étant pivotante autour d'au moins un axe de pivotement (x) porté par une face latérale,
**caractérisé en ce que** chaque porte (1) comporte un profilé modulaire et, en position normale de la carrosserie, deux articulations (3a, 3b) sont disposées en contact l'une au-dessus de l'autre et, en position dans laquelle le toit est surélevé, les deux articulations (3a, 3b) sont écartées l'une de l'autre, le profilé modulaire de la porte (1) étant solidaire de l'articulation (3a) entraînée en écartement de l'autre.

2. Véhicule selon la revendication 1,
**caractérisé en ce que** l'axe de pivotement (x) est un axe télescopique.

3. Véhicule selon la revendication 1,
**caractérisé en ce que** ledit axe de pivotement (x) est constitué d'au moins deux bouts d'axe alignés, chacun coopérant avec l'une des articulations (3a, 3b) en contact l'une avec l'autre en position normale et étant écartables l'un de l'autre lors de l'entraînement de la carrosserie en surélévation.

4. Véhicule selon l'une des revendications 1 à 3,
**caractérisé en ce que** chaque extrémité d'une face latérale de la carrosserie est pourvue d'un poteau (2) sur lequel sont montées les articulations (3) des portes (1), en particulier l'axe de pivotement (x) solidaire de la carrosserie, ce poteau (2) renfermant également les moyens d'entraînement en surélévation de la carrosserie.

5. Véhicule selon l'une des revendications 1 à 4,
**caractérisé en ce que** le profilé modulaire est un profilé télescopique caché dans le profilé inférieur en position normale et qui se déploie lors du passage vers la position surélevée de la carrosserie.

6. Véhicule selon l'une des revendications 1 à 5,
**caractérisé en ce que** l'articulation est constituée d'une plaque formant bielle montée pivotante à la fois autour du premier axe de pivotement (x) porté par une platine solidaire de la caisse du véhicule et d'un second axe de pivotement porté par une platine solidaire de la porte.

## Patentansprüche

1. Fahrzeug mit modularer Karosserie, dessen Karosserie zwischen einer normalen Position und einer Position, in der das Dach erhöht ist, wechseln kann, wobei die genannte Karosserie auf der Rückseite mit Türen (1) bestehend aus Profilen ausgestattet ist, die mit den Außenseiten der genannten Karosserie beweglich verbunden sind, wobei jedes Gelenk (3, 3a, 3b) um mindestens eine Drehachse (x) drehbar ist, die von einer Längsseite getragen wird,
**dadurch gekennzeichnet, dass** jede Tür (1) ein modulares Profil aufweist, wobei bei normaler Position der Karosserie zwei Gelenke (3a, 3b) derart übereinander angeordnet sind, dass sie, Kontakt haben, und in der Position, in der das Dach erhöht ist, die beiden Gelenke (3a, 3b) voneinander entfernt sind, wobei das Profil der Tür (1) fest mit dem Gelenk (3a) verbunden ist, welches im Abstand zum anderen angetrieben wird.

2. Fahrzeug nach Anspruch 1,
**dadurch gekennzeichnet, dass** die Drehachse (x) eine teleskopische Achse ist.

3. Fahrzeug nach Anspruch 1,
**dadurch gekennzeichnet, dass** die genannte Drehachse (x) aus mindestens zwei ausgerichteten Achsenden besteht, wobei jedes mit einem der Gelenke (3a, 3b) zusammenwirkt, wobei beide in normaler Position miteinander Kontakt haben und beide beim Antreiben der Karosserie in den erhöhten Zustand voneinander entfernt werden können.

4. Fahrzeug nach einem der Ansprüche 1 bis 3,
**dadurch gekennzeichnet, dass** jedes äußere Ende einer Außenseite der Karosserie einen Pfosten (2) aufweist, an dem die Gelenke (3) der Türen (1) befestigt sind, insbesondere die mit der Karosserie fest verbundene Drehachse (x) , wobei dieser Pfosten (2) auch die Antriebsmittel für das Antreiben der Karosserie in den erhöhten Zustand enthält.

5. Fahrzeug nach einem der Ansprüche 1 bis 4,
**dadurch gekennzeichnet, dass** das modulare Profil ein teleskopisches Profil ist, das bei normaler Position im unterhalb liegenden Profil aufgenommen ist und das sich beim Übergang in den erhöhten Zustand der Karosserie entfaltet.

6. Fahrzeug nach einem der Ansprüche 1 bis 5,
**dadurch gekennzeichnet, dass** das Gelenk aus einer Platte besteht, die eine Pleuelstange bildet, welche so angeordnet ist, dass sie sich sowohl um die erste Drehachse (x), die von einer mit der Karosserie des Fahrzeugs fest verbundenen Metallplatte getragen wird, als auch um eine zweite Drehachse dreht, die von einer mit der Tür fest verbundenen Platte getragen wird.

## Claims

1. Vehicle with a modular body, the body of which transforms between a normal position and a position in which the roof is raised, said body being provided, on its rear face, with doors (1) made up of profiles and articulated on the lateral faces of said body, each articulation (3, 3a, 3b) pivoting about at least one pivotal spindle (x) carried by a lateral face, **characterised in that** each door (1) comprises a modular profile and, in the normal position of the body, two articulations (3a, 3b) are disposed in contact one above the other and, in the position in which the roof is raised, the two articulations (3a, 3b) are separated from each other, the modular profile of the door (1) being integral with the articulation (3a) which is caused to separate from the other.

2. Vehicle according to claim 1, **characterised in that** the pivotal spindle (x) is a telescopic spindle.

3. Vehicle according to claim 1, **characterised in that** said pivotal spindle (x) is made up of at least two aligned spindle ends, each one cooperating with one of the articulations (3a, 3b) which are in contact with each other in the normal position and can be separated from each other when the body is caused to rise.

4. Vehicle according to one of claims 1 to 3, **characterised in that** each end of a lateral face of the body is provided with a pillar (2), on which are mounted the articulations (3) of the doors (1), in particular the pivotal spindle (x) integral with the body, this pillar (2) also containing the means for causing the body to rise.

5. Vehicle according to one of claims 1 to 4, **characterised in that** the modular profile is a telescopic profile, which is hidden in the lower profile in the normal position, and which is deployed when the body is passing into the raised position.

6. Vehicle according to one of claims 1 to 5, **characterised in that** the articulation is made up of a block forming a rod, which pivots both about the first pivotal spindle (x), carried by a plate integral with the chassis of the vehicle, and a second pivotal spindle, carried by a plate integral with the door.
